(19) Europäisches Patentamt
European Patent Office
Office européen des brevets

(11) EP 0 624 781 B1

(12) **FASCICULE DE BREVET EUROPEEN**

(45) Date de publication et mention
de la délivrance du brevet:
**16.09.1998 Bulletin 1998/38**

(51) Int Cl.$^6$: **G01F 23/24**

(21) Numéro de dépôt: **94400766.5**

(22) Date de dépôt: **08.04.1994**

(54) **Perfectionnements aux dispositifs de mesure de niveau de liquide à fil résistif**

Verbesserungen an Flüssigkeitsstandsmessern mit Widerstandsdraht

Improvements to resistive wire liquid level sensors

(84) Etats contractants désignés:
**DE ES GB IT SE**

(30) Priorité: **09.04.1993 FR 9304281**

(43) Date de publication de la demande:
**17.11.1994 Bulletin 1994/46**

(73) Titulaire: **MAGNETI MARELLI FRANCE**
**92000 Nanterre (FR)**

(72) Inventeurs:
- **Bezard, Jean-Jacques**
  **F-78400 Chatou (FR)**
- **Marteau, Bernard**
  **F-91430 Igny (FR)**
- **Eisenberger, Benjamin**
  **F-78600 Maisons-Lafitte (FR)**

(74) Mandataire: **Martin, Jean-Jacques et al**
**Cabinet REGIMBEAU**
**26, Avenue Kléber**
**75116 Paris (FR)**

(56) Documents cités:
EP-A- 0 159 263   EP-A- 0 446 418
DE-A- 4 016 970   FR-A- 2 367 276
FR-A- 2 624 969

## Description

La présente invention concerne la détection du niveau d'un liquide.

La Demanderesse a déjà proposé (brevet français publié sous le n° 2367276) un dispositif permettant le contrôle du niveau de liquide contenu dans un réservoir. Ce dispositif comporte une sonde résistive partiellement immergée dans le liquide, des moyens d'alimentation capables d'appliquer de l'énergie électrique à ladite sonde, des moyens sensibles à l'une au moins des grandeurs électriques tension et courant dans la sonde, et des moyens pour surveiller l'évolution de ladite grandeur à partir de sa valeur initiale, au début de l'application d'énergie électrique, afin d'en déduire des informations sur le niveau de liquide. L'indication de niveau obtenue selon ce brevet antérieur est assez fiable pour permettre par exemple une alerte lorsqu'un seuil de niveau est atteint.

La Demanderesse a ensuite proposé de nombreux perfectionnements à ce dispositif.

D'autres variantes de dispositifs de détection du niveau d'un liquide sont décrites dans les documents EP-A-159253, DE-A-4016970 et FR-A-2624969 et FR-A-2514497 qui concernent des dispositifs comprenant une sonde résistive partiellement immergée dans le liquide, des moyens d'alimentation capables d'appliquer de l'énergie électrique à ladite sonde, des moyens sensibles à l'une au moins des grandeurs électriques tension et courant dans la sonde, et des moyens pour surveiller l'évolution de ladite grandeur afin d'en déduire des informations sur le niveau de liquide, par mesure de l'écart de temps correspondant à une évolution d'amplitude prédéterminée de la grandeur électrique.

Le but de la présente invention est de perfectionner encore les dispositifs connus de mesure de niveau de liquide à sonde résistive.

Ce but est atteint dans le cadre de la présente invention, grâce à un dispositif du type comprenant :

- une sonde résistive partiellement immergée dans le liquide,
- des moyens d'alimentation capables d'appliquer de l'énergie électrique à ladite sonde,
- des moyens sensibles à l'une au moins des grandeurs électriques tension et courant dans la sonde, et
- des moyens pour surveiller l'évolution de ladite grandeur afin d'en déduire des informations sur le niveau de liquide, par mesure de l'écart de temps correspondant à une évolution d'amplitude prédéterminée de la grandeur électrique, caractérisé par le fait que les moyens de surveillance sont adaptés pour détecter les instants de franchissement de niveaux de tension prédéfinis aux bornes de la sonde toujours par détection du basculement d'un même bit particulier de la pluralité de bits en sortie d'un convertisseur analogique/numérique.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente un dispositif de mesure conforme à la présente invention,
- la figure 2A représente la réponse en tension d'une sonde, à un créneau d'alimentation en courant représenté sur la figure 2B,
- la figure 3 illustre une variante de mesure conforme à la présente invention,
- la figure 4 illustre un organigramme de mesure conforme à la présente invention,
- la figure 5 représente une variante de mesure conforme à la présente invention.

### STRUCTURE GENERALE DU DISPOSITIF DE MESURE CONFORME A LA PRESENTE INVENTION

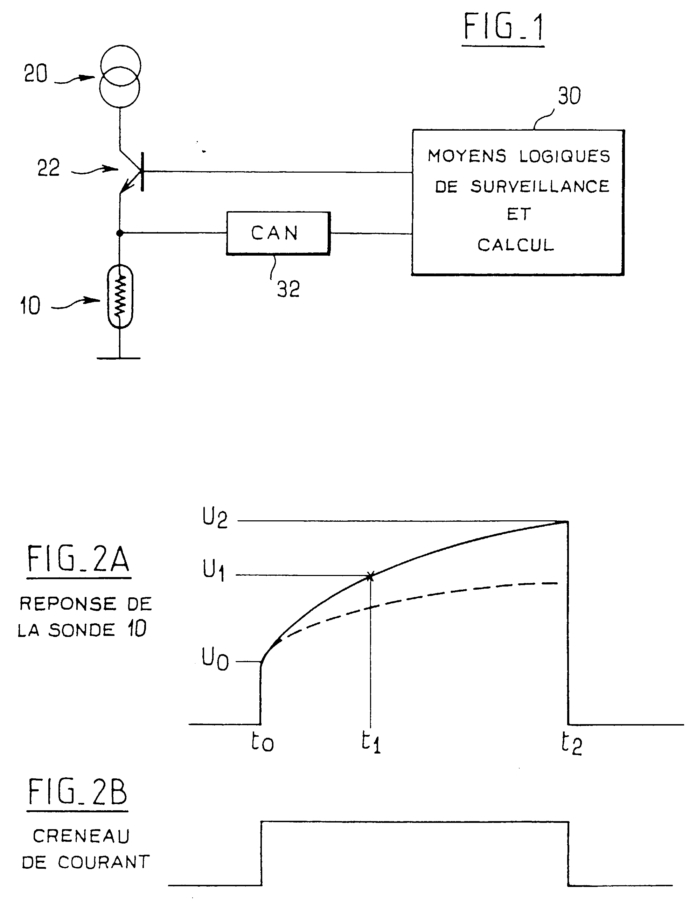

Le dispositif conforme à la présente invention, représenté sur la figure 1 annexée, comprend une sonde 10, des moyens d'alimentation électrique 20, et des moyens 30 sensibles à l'une au moins des grandeurs électriques tension et courant dans la sonde 10.

La sonde 10 est une sonde résistive, à coefficient de température non nul de préférence sous forme d'un fil. Elle est partiellement immergée dans le liquide. De préférence, la sonde 10 est positionnée dans une direction générale non horizontale, avantageusement sur toute la hauteur du carter ou du réservoir contenant le liquide ou au moins une majeure partie de cette hauteur, pour permettre de mesurer le niveau de liquide sur toute la hauteur du carter ou réservoir, ou au moins une majeure partie de celle-ci. Toutefois, en variante la sonde 10 peut être placée horizontalement. Dans ce cas le dispositif permet la détection du franchissement, par le liquide, du seuil de niveau correspondant à la sonde.

La Demanderesse a déjà commercialisé de nombreuses sondes aptes à être utilisées dans le cadre de la présente invention. Pour cette raison, la sonde 10 ne sera pas décrite plus en détail par la suite.

Les moyens d'alimentation électrique 20 peuvent faire l'objet de diverses variantes de réalisation.

Ces moyens 20 peuvent être formés d'une source de tension constante.

Cependant, selon le mode de réalisation préférentiel représenté sur la figure 1, les moyens d'alimentation électrique 20 sont formés d'une source de courant constant.

La source de courant 20 est de préférence reliée à la sonde 10 par l'intermédiaire d'un interrupteur 22. Cet interrupteur 22 est contrôlé par les moyens 30. Il est formé avantageusement d'un transistor, comme représenté sur la figure 1.

Les moyens 30 sont non seulement sensibles à l'une au moins des grandeurs électriques tension et courant dans la sonde 10, mais sont également adaptés pour surveiller l'évolution de ladite grandeur électrique afin d'en déduire des informations sur le niveau de liquide.

Plus précisément encore, dans le cadre de la présente invention, comme indiqué précédemment, les moyens 30 sont adaptés pour mesurer l'écart de temps correspondant à une évolution d'amplitude prédéterminée de la grandeur électrique.

De préférence les moyens 30 sont adaptés pour mesurer au moins deux grandeurs différentielles représentatives de l'évolution de ladite grandeur. En outre les moyens 30 sont adaptés de préférence pour définir le niveau de liquide en exploitant une relation basée sur le coefficient d'échange thermique de la sonde dans le liquide et sur le coefficient d'échange thermique de la sonde dans l'air, relation dans laquelle on utilise lesdites grandeurs différentielles.

Les moyens 30 sont de préférence des moyens numériques contrôlés par un microprocesseur.

A cet effet, un convertisseur analogique/numérique 32 est intercalé entre la sonde 10 et les moyens 30. Plus précisément l'entrée analogique 33 du convertisseur 32 est reliée à la sonde 10, tandis que sa sortie numérique 34 est reliée aux moyens 30.

REPONSE DE LA SONDE

On a représenté sur la figure 2A, en trait continu la réponse en tension de la sonde 10 dans l'air (correspondant à un niveau minimal de liquide), et en traits interrompus la réponse de la même sonde 10 dans le liquide (correspondant à un niveau maximal de liquide), suite à un créneau de courant constant d'excitation issu de la source 20, comme représenté sur la figure 2B.

La Demanderesse a démontré que

$$(U_1-U_0)=(\alpha'\rho^2 l^3/s^2 p)[(h/KH)(1-e^{-KHpt1/\gamma s})+(L-h)(1-e^{-KApt1/\gamma s})/KA]$$

$$=(\alpha'\rho^2 l^3 L/s^2 pKA)[(x/\alpha)(1-e^{-\alpha t1/\tau})+(1-x)(1-e^{-t1/\tau})] \tag{1}$$

Avec :

$U_0$ = tension mesurée aux bornes de la sonde 10 à l'origine to du créneau de courant,
$U_1$ = tension mesurée aux bornes de la sonde 10 à un instant tl pendant le créneau de courant,
$\alpha'$ = coefficient de variation de la résistivité du fil de la sonde 10, avec la température,
$\rho$ = résistivité du fil de la sonde 10 à la température nominale,
$l$ = intensité du courant issu de la source 20,
$s$ = section du fil de la sonde 10,
$p$ = périmètre du fil de la sonde 10,
$h$ = hauteur immergée du fil de la sonde 10,
$L$ = longueur totale du fil de la sonde 10,
$KH$ = coefficient d'échange thermique du fil de la sonde 10, dans le liquide,
$KA$ = coefficient d'échange thermique du fil de la sonde 10, dans l'air,
$\gamma$ = capacité thermique du fil de la sonde 10,
$x = h/L$
$\alpha = KH/KA$
$\tau = \gamma d/4KA$

Pour un fil de sonde 10 de section circulaire, la relation (1) devient :

$$(U_1-U_0)=$$

$$(\alpha'\rho^2 l^3 16/\pi^3 d^5)[(h/KH)(1-e^{-4KHt1/\gamma d})+(L-h)(1-e^{-4KAt1/\gamma d})/KA]=$$

$$(16\alpha'\rho^2 l^3 L/\pi^3 d^5 KA[(x/\alpha)(1-e^{-\alpha t1/\tau})+(1-x)(1-e^{-t1/\tau})] \tag{2}$$

avec d = diamètre du fil de la sonde 10.

De même en appelant $U_2$ la tension mesurée aux bornes de la sonde 10 à un instant t2 pendant le créneau de courant, on a :

$$(U_2-U_1)=$$

$$(\alpha'\rho^2 l^3 L/s^2 pKA)[(x/\alpha)(e^{-\alpha t1/\tau}-e^{-\alpha t2/\tau})+(1-x)(e^{-t1/\tau}-e^{-t2/\tau})] \qquad (3)$$

soit si l'on appelle T21 = t2 - t1 :

$$(U_2-U_1)=$$

$$(\alpha'\rho^2 l^3 L/s^2 pKA)[(x/\alpha)e^{-\alpha t1/\tau}(1-e^{-\alpha T21/\tau})+(1-x)e^{-t1/\tau}(1-e^{-T21/\tau})] \qquad (4)$$

Les formules indiquées ci-dessus sont des formules approchées de la réponse exacte de la sonde.

En pratique, le dispositif conforme à la présente invention peut donc exploiter des formules plus précises. En particulier, on peut affiner la définition du paramètre $\alpha'$ en fonction de la température.

Par la suite, on appellera :

$$Umax = \alpha'\rho^2 l^3 L/s^2 pKA.$$

## EXEMPLE DE REALISATION DE LA PRESENTE INVENTION

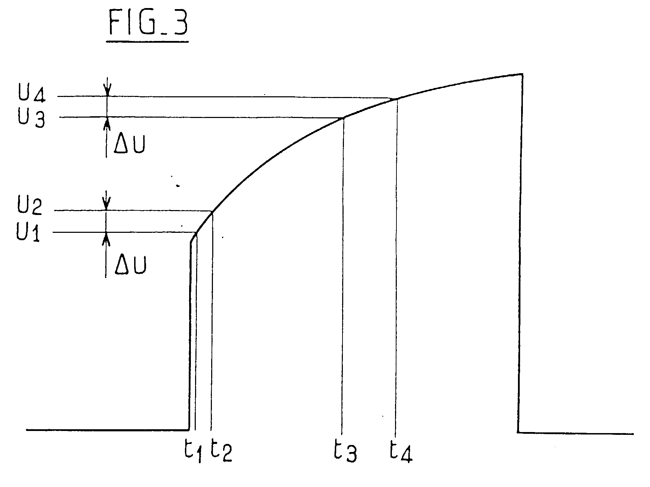

Selon un exemple de réalisation de la présente invention, les moyens de surveillance 30 mesurent les instants t1, t2, t3 et t4 de franchissement de niveaux de tension prédéfinis U1, U2, U3 et U4 aux bornes de la sonde 10, comme schématisé sur la figure 3, tels que (U2-U1)=K(U4-U3), K étant une grandeur connue.

Les moyens 30 peuvent alors déduire l'information x représentative du niveau de liquide, de cette équation, sachant que :

$$(U2-U1)=Umax[(x/\alpha)(e^{-\alpha t1/\tau}-e^{-\alpha t2/\tau})+(1-x)(e^{-t1/\tau}-e^{-t2/\tau})] \qquad (5)$$

et

$$(U4-U3)=Umax[(x/\alpha)(e^{-\alpha t3/\tau}-e^{-\alpha t4/\tau})+(1-x)(e^{-t3/\tau}-e^{-t4/\tau})] \qquad (6)$$

ou encore en posant
T21 = t2-t1 et T43 = t4-t3 :

$$(U2-U1)=Umax[(x/\alpha)e^{-\alpha t1/\tau}(1-e^{-\alpha T21/\tau})+(1-x)e^{-t1/\tau}(1-e^{-T21/\tau})] \qquad (7)$$

et

$$(U4-U3)=Umax[(x/\alpha)e^{-\alpha t3/\tau}(1-e^{-\alpha T43/\tau})+(1-x)e^{-t3/\tau}(1-e^{-T43/\tau})] \qquad (8)$$

En pratique, la mesure des instants t1, t2, t3, t4, de franchissement des niveaux de tension prédéfinis U1, U2, U3 et U4 est obtenue en détectant le basculement de bits particuliers en sortie du convertisseur analogique/numérique 32.

Plus précisément, si l'on prend K=1, la mesure des instants t1, t2, t3, t4 peut être obtenue en détectant le basculement d'un bit de poids (U2-U1)=(U4-U3) en sortie du convertisseur 32.

Cette disposition présente l'intérêt de garantir une grande précision de mesure puisqu'elle exploite toujours le même bit de sortie du convertisseur 32.

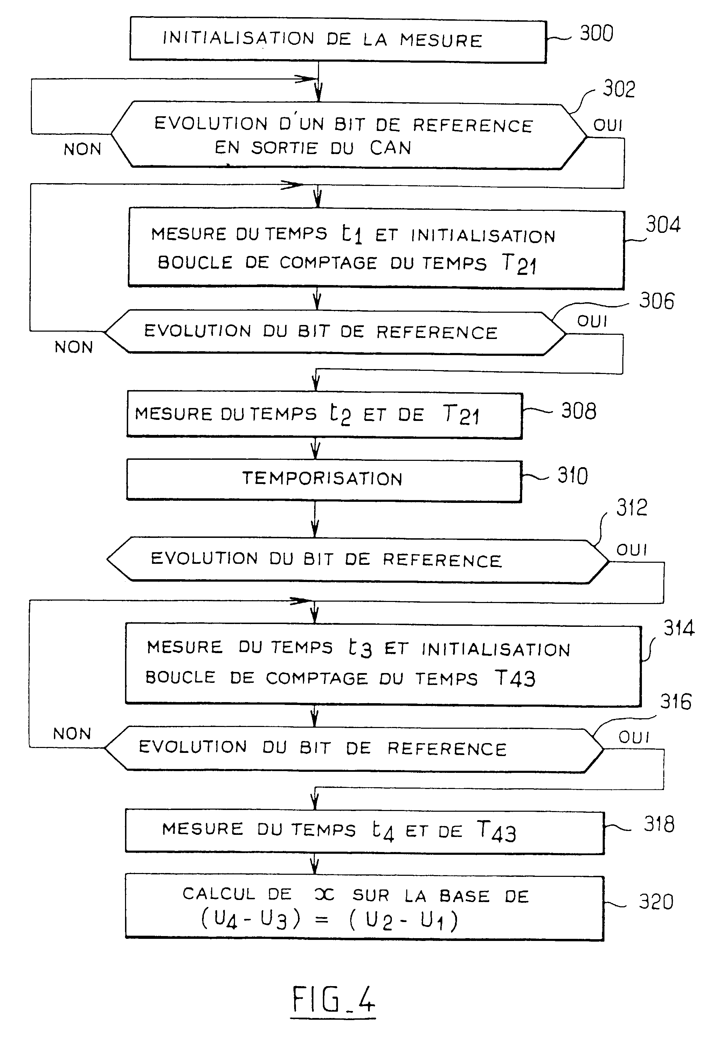

L'organigramme correspondant du processus mis en oeuvre par les moyens 30 est schématisé sur la figure 4, pour le cas où K=1.

Après l'étape 300 d'initialisation de la mesure, c'est-à-dire d'initialisation du créneau de courant d'alimentation issu de la source 20, les moyens 30 scrutent l'évolution d'un bit de référence de poids adéquat en sortie du convertisseur 32, à l'étape 302.

Lorsque cette évolution apparaît à l'étape 304, les moyens 30 mesurent le temps t1.

Les moyens 30 scrutent ensuite à l'étape 306 une nouvelle évolution du même bit de référence à la sortie du convertisseur 32.

Lorsque cette nouvelle évolution apparaît à l'étape 308, les moyens 30 mesurent le temps t2.

A l'étape 310 les moyens 30 opèrent une temporisation.

Puis à l'étape 312 les moyens 30 reprennent l'opération de scrutation de l'évolution du bit de référence en sortie du convertisseur 32.

Lorsque cette évolution apparaît à l'étape 314, les moyens 30 mesurent le temps t3.

Les moyens 30 scrutent ensuite à l'étape 316 une nouvelle évolution du même bit de référence à la sortie du convertisseur 32.

Lorsque cette nouvelle évolution apparaît à l'étape 318, les moyens 30 mesurent le temps t4.

Les moyens 30 sont alors en mesure de calculer x sur la base de la relation (U4-U3)=(U2-U1), sachant que t1, t2, t3 et t4 sont connus.

Selon une autre variante du second exemple de réalisation de l'invention, on peut prendre U3=U1.

La relation exploitée par les moyens 30 devient alors (U2-U1)=K(U4-U1) soit en posant T21=t2-t1 et T41=t4-t1 :

$$(x/\alpha)(1-e^{-\alpha T21/\tau})+(1-x)(1-e^{-T21/\tau})=$$

$$K[(x/\alpha)(1-e^{-\alpha T41/\tau})+(1-x)(1-e^{-T41/\tau})] \tag{9}$$

## DEUXIEME EXEMPLE DE REALISATION DE L'INVENTION

Selon un deuxième exemple de réalisation de la présente invention, les moyens 30 exploitent des grandeurs différentielles formées par les dérivées $\Delta U/dt$ de la réponse de la sonde.

Une fois les dérivées précitées obtenues les moyens 30 peuvent par exemple exploiter leur rapport. On a en effet si l'on appelle A la dérivée obtenue à l'instant t1 et B la dérivée obtenue à l'instant t2 :

$$A/B=(x\,e^{-\alpha t1/\tau}+(1-x)e^{-t1/\tau})/(x\,e^{-\alpha t2/\tau}+(1-x)e^{-t2/\tau}) \tag{10}$$

Selon encore une autre variante, pour permettre de s'affranchir de la section, du périmètre, voire du diamètre, du fil de la sonde 10 qui peuvent ne pas être connus avec précision, les moyens 30 peuvent exploiter non pas deux dérivées, mais trois dérivées, par exemple la dérivée A à l'origine t0 du créneau de courant, la dérivée B à un instant t3 et la dérivée C à un instant t5. Ces trois dérivées A, B et C permettent d'obtenir :

$$m = B/A = x\,e^{-\alpha t3/\tau}+(1-x)\,e^{-t3/\tau} \tag{11}$$

et

$$n = C/A = x\,e^{-\alpha t5/\tau}+(1-x)\,e^{-t5/\tau} \tag{12}$$

Le système de deux équations (11) et (12) à deux inconnues x et $\tau$ peut être résolues par approches successives ou encore par calcul direct sachant que B/A, C/A, $\alpha$, t1 et t2 sont connues.

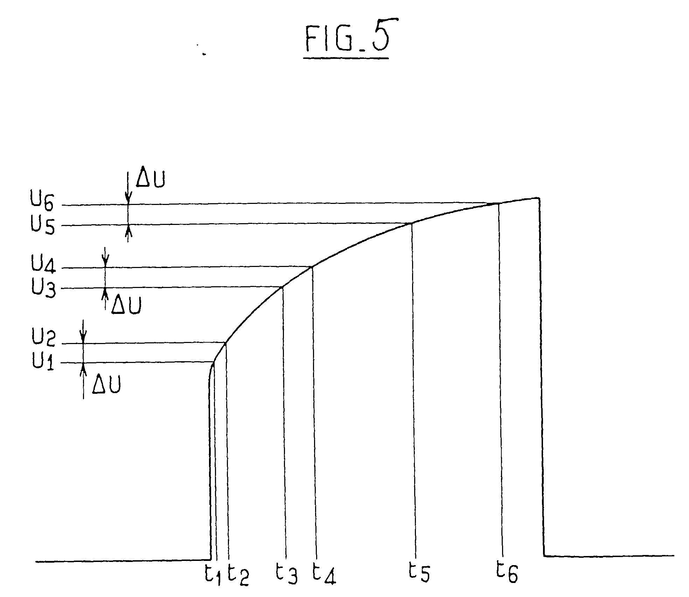

On a évoqué précédemment l'obtention des dérivées en mesurant les instants t1, t2, t3, t4, t5 et t6 de franchissement de niveaux prédéfinis, U1, U2, U3, U4, U5 et U6 tels que (U4-U3)=K1(U6-U5)=K2(U2-U1), comme schématisé sur la figure 5.

En pratique, on prendra de préférence K1=K2=1 afin de mesurer les temps t1, t2, t3, t4, t5 et t6 aux instants de basculement d'un même bit de référence en sortie du convertisseur 32.

On a alors :

$$B/A = (t2\text{-}t1)/(t4\text{-}t3)$$

et

$$C/A = (t2\text{-}t1)/(t6\text{-}t5).$$

Les rapports entre différences de temps permettent donc de résoudre directement le système d'équations (11) et (12).

Plus précisément, seuls les temps t1, t2, t3 et t4 ou t3, t4, t5 et t6 seront mesurés si $\tau$ étant connue on souhaite seulement résoudre l'équation (10). En revanche, si $\tau$ est inconnue et que l'on souhaite résoudre le système d'équations (11) et (12) il convient de mesurer t1, t2, t3, t4, t5 et t6 pour permettre l'obtention de B/A et C/A.

Il convient également de noter que si t1 diffère de t0, les équations (11) e t (12) peuvent être affinées sous la forme :

$$m = B/A = (x\ e^{-\alpha t3/\tau} + (1\text{-}x)\ e^{-t3/\tau})/(x\ e^{-\alpha t1/\tau} + (1\text{-}x)\ e^{-t1/\tau})$$

et

$$n = C/A = (x\ e^{-\alpha t5/\tau} + (1\text{-}x)\ e^{-t5/\tau})/(x\ e^{-\alpha t1/\tau} + (1\text{-}x)\ e^{-t1/\tau}).$$

## VARIANTE DE REALISATION PERMETTANT D'ELIMINER DES CALCULS LA SECTION OU LE PERIMETRE DU FIL DE LA SONDE, VOIRE LE DIAMETRE DE CELLE-CI

Dans le cadre de cette variante, les moyens 30 mesurent les instants t1, t2, t3 et t4 de franchissement de niveaux prédéterminés U1, U2, U3 et U4 tels que (U4-U3)=K(U2-U1).

On obtient ainsi un système de deux équations à deux inconnues qui permet de calculer le niveau de liquide par toute méthode adéquate.

En pratique, on peut de préférence prendre (U4-U3)=(U2-U1).

Les instant t1, t2, t3 et t4 coïncident ainsi avec les instants de basculement d'un bit de référence en sortie du convertisseur 32. Cette disposition est avantageuse car elle donne une bonne précision de mesure.

L'homme de l'art comprendra que les moyens proposés dans le cadre de la présente invention permettent d'obtenir une mesure plus précise que les moyens décrits dans les documents antérieurs FR-A-2367276.

Bien entendu la présente invention n'est pas limitée aux modes de réalisation précédemment décrits mais s'étend à toutes variantes conformes à la revendication 1.

Ainsi par exemple on a précédemment décrit une source d'alimentation en courant de la sonde 10. Toutefois, l'homme de l'art adaptera aisément le dispositif à une alimentation en tension.

La sonde peut également être alimentée par une quantité d'énergie connue, de préférence constante, ou par l'intermédiaire d'une résistance série, comme décrit dans le document FR-A-2514497.

Par ailleurs, comme proposé antérieurement par la Demanderesse dans le document FR-A-2514497, l'information représentative du niveau et/ou volume de liquide peut être lue dans une table prémémorisée.

## Revendications

1. Dispositif pour la détection du niveau d'un liquide du type comprenant :

   - une sonde résistive (10) partiellement immergée dans le liquide,
   - des moyens d'alimentation (20) capables d'appliquer de l'énergie électrique à ladite sonde,
   - des moyens sensibles (30) à l'une au moins des grandeurs électriques tension et courant dans la sonde, et
   - des moyens (30) pour surveiller l'évolution de ladite grandeur afin d'en déduire des informations sur le niveau de liquide, par mesure de l'écart de temps correspondant à une évolution d'amplitude prédéterminée de la grandeur électrique,

   caractérisé par le fait que les moyens de surveillance (30) détectent les instants de franchissement des niveaux de tension prédéfinis aux bornes de la sonde toujours par détection du basculement d'un même bit particulier de la pluralité de bits en sortie d'un convertisseur analogique/numérique (32).

2. Dispositif selon la revendication 1, caractérisé par le fait que les moyens de surveillance (30) exploitent une relation de la forme :

$$(U_1-U_0)=(\alpha'\rho^2l^3/s^2p)[(h/KH)(1-e^{-KHpt1/\gamma s})+(L-h)(1-e^{-KApt1/\gamma s})/KA]$$

$$=(\alpha'\rho^2l^3L/s^2pKA)[(x/\alpha)(1-e^{-\alpha t1/\tau})+(1-x)(1-e^{-t1/\tau})]$$

Avec :

$U_0$ = tension mesurée aux bornes de la sonde (10) à l'origine to du créneau de courant,
$U_1$ = tension mesurée aux bornes de la sonde (10) à un instant tl pendant le créneau de courant,
$\alpha'$ = coefficient de variation de la résistivité du fil de la sonde (10), avec la température,
$\rho$ = résistivité du fil de la sonde (10) à la température nominale,
$l$ = intensité du courant issu de la source (20),
$s$ = section du fil de la sonde (10),
$p$ = périmètre du fil de la sonde (10),
$h$ = hauteur immergée du fil de la sonde (10),
$L$ = longueur totale du fil de la sonde (10),
$KH$ = coefficient d'échange thermique du fil de la sonde (10), dans le liquide,
$KA$ = coefficient d'échange thermique du fil de la sonde (10), dans l'air,
$\gamma$ = capacité thermique du fil de la sonde (10),
$x = h/L$
$\alpha = KH/KA$
$\tau = \gamma d/4KA$.

3. Dispositif selon l'une des revendications 1 ou 2, caractérisé par le fait que les moyens de surveillance (30) exploitent une relation de la forme :

$$(U_2-U_1)=$$

$$(\alpha'\rho^2l^3L/s^2pKA)[(x/\alpha)(e^{-\alpha t1/\tau}-e^{-\alpha t2/\tau})+(1-x)(e^{-t1/\tau}-e^{t2/\tau})] \tag{3}$$

dans laquelle U2 et U1 représentent des tensions consécutives mesurées aux bornes de la sonde (10).

4. Dispositif selon l'une des revendications 1 à 3, caractérisé par le fait que les moyens de surveillance (30) mesurent les instants t1, t2, t3 et t4 de franchissement de niveaux de tension prédéfinis U1, U2, U3 et U4 aux bornes de la sonde (10) tels que (U2-U1)=K(U4-U3), K étant une grandeur connue, et déduisent le niveau de liquide de cette relation.

5. Dispositif selon la revendication 4, caractérisé par le fait que K=1.

6. Dispositif selon l'une des revendications 4 ou 5, caractérisé par le fait que U3=U1.

7. Dispositif selon l'une des revendications 1 à 6, caractérisé par le fait que les moyens d'alimentation (20) sont formés d'une source de tension.

8. Dispositif selon l'une des revendications 1 à 6, caractérisé par le fait que les moyens d'alimentation (20) sont formés d'une source de courant.

**Patentansprüche**

1. Vorrichtung zur Messung eines Flüssigkeitsspiegels, umfassend:

- eine Wiederstandssonde (10), die teilweise in die Flüssigkeit eintraucht,
- Versorgungsmittel (20), die der Sonde elektrische Energie zuführen können,
- mindestens für eine der elektrischen Größen Spannung und Stromstärke in der Sonde empfindliche Mittel (20), und
- Mittel (30) zur Überwachung der Entwicklung dieser Größe, um daraus Informationen über den Flüssigkeitsspiegel abzuleiten durch Messung der Zeit, die der zuvor bestimmten Entwicklung der Amplitude der elektrischen Größe entspricht,

dadurch charakterisiert, daß die Überwachungsmittel (30) die Momente der Überschreitung der zuvor definierten Spannungen an den Oberflächen (bornes) der Sonde stets durch Nachweis des Umschaltens desselben speziellen Bits aus einer Vielzahl von Bits am Ausgang eines analog/numerischen Umwandlers (32) nachweisen.

2. Vorrichtung nach Anspruch 1, dadurch charakterisiert, daß die Überwachungsmittel (30) eine Beziehung der Form verwenden:

$$(U_1 - U_0) = (\alpha'\rho^2 I^3 / s^2 p) \left[ (h/KH)(1 - e^{-KHpt1/\gamma s}) + (I-h)(1 - e^{-KApt1/\gamma s})/KA \right]$$

$$= \alpha'\rho^2 I^3 I / s^2 pKA) \left[ (x/\alpha)(1 - e^{-\alpha t1/\tau}) + (1-x)(1 - e^{-t1/\tau}) \right]$$

mit:

$U_0 = $ gemessene Spannung an den Oberflächen der Sonde (10) zur Anfangszeit t0 des Stromflusses,
$U_1 = $ an den Oberflächen der Sonde (10) gemessene Spannung zu einer Zeit tl während des Stromflusses,
$\alpha' = $ Koeffizient der Änderung des Widerstands des Drahts der Sonde (10) mit der Temperatur,
$\rho = $ Widerstand des Drahts der Sonde (10) bei der Nominaltemperatur,
$I = $ Stromstärke an der Stromquelle (20),
$s = $ Querschnitt des Drahts der Sonde (10),
$p = $ Umfang des Drahts der Sonde (10),
$h = $ Eintauchhöhe des Drahts der Sonde (10),
$I = $ Gesamtlänge des Drahts der Sonde (10),
$KH = $ Wärmeaustauschkoeffizient des Drahts der Sonde (10) in der Flüssigkeit,
$KA = $ Wärmeaustauschkoeffizient des Drahts der Sonde (10) in Luft,
$\gamma = $ Wärmekapazität des Drahts der Sonde (10),
$x = $ h/l,
$\alpha = $ KH/KA,
$\tau = $ $\gamma$d/4KA.

3. Vorrichtung nach einem der Ansprüche 1 oder 2, dadurch charakterisiert, daß die Überwachungsmittel (30) eine Beziehung der Form verwenden:

$$(U_2 - U_1) =$$

$$\alpha'\rho^2 I^3 I / s^2 pKA) \left[ (x/\alpha)(e^{-\alpha t1/\tau} - e^{-\alpha t2/\tau}) + (1-x)(e^{-t1/\tau} - e^{t2/\tau}) \right] \tag{3}$$

wobei U2 und U1 aufeinanderfolgende Spannungen darstellen, die an den Oberflächen der Sonde (10) gemessen werden.

4. Vorrichtung nach einem der Ansprüche 1 bis 3, dadurch charakterisiert, daß die Überwachungsmittel (30) die Zeiten t1, t2, t3 und t4 der Überschreitung der zuvor definierten Spannungen U1, U2, U3 und U4 an den Oberflächen der Sonde (10) messen, so daß (U2 - U1) = K(U4 - U3), wobei K eine bekannte Größe ist, und den Flüssigkeitsspiegel aus dieser Beziehung ableiten.

5. Vorrichtung nach Anspruch 4, dadurch charakterisiert, daß K = 1 ist.

6. Vorrichtung nach einem der Ansprüche 4 oder 5, dadurch charakterisiert, daß U3 = U1 ist.

7. Vorrichtung nach einem der Ansprüche 1 bis 6, dadurch charakterisiert, daß die Zufuhrmittel (20) von einer Spannungsquelle gebildet werden.

8. Vorrichtung nach einem der Ansprüche 1 bis 6, dadurch charakterisiert, daß die Zufuhrmittel (20) von einer Stromquelle gebildet werden.

## Claims

1. A device for detecting the level of a liquid, the device being of the type comprising:

   - a resistive probe (10) partially immersed in the liquid;
   - feed means (20) capable of applying electrical energy to said probe;
   - means (32) responsive to at least one of the voltage and current electrical magnitudes in the probe; and
   - monitoring means (30) for monitoring variation in said magnitude in order to deduce therefrom information about the liquid level by measuring the time difference corresponding to a change of predetermined amplitude in the electrical magnitude;

   the device being characterized by the fact that the monitoring means (30) detect the instants at which predefined voltage levels at the terminals of the probe are crossed by detecting, on each occasion, a change in state of the same particular bit in a plurality of output bits from an analog-to-digital converter (32).

2. A device according to claim 1, characterized by the fact that the monitoring means (30) make use of a relationship of the following form:

$$(U_1-U_0) = (\alpha'\rho^2 l^3/s^2 p) [(h/KH) (1-e^{(KHpt1/\gamma s)})+(l-h) (1-e^{-KApt1/\gamma s})/KA]$$

$$= (\alpha'\rho^2 l^3 l/s^2 pKA) [(x/\alpha) (1-e^{-\alpha t1/\tau})+(1-x) (1-e^{-t1/\tau})]$$

where:

   $U_0$ = the voltage measured across the terminals of the probe (10) at the origin to of the current pulse;
   $U_1$ = the voltage measured across the terminals of the probe (10) at an instant $t_1$ during the current pulse;
   $\alpha'$ = the coefficient of variation in the resistivity of the wire of the probe (10) with temperature;
   $\rho$ = the resistivity of the wire of the probe (10) at nominal temperature;
   $l$ = the current delivered by the source (20);
   $s$ = the section of the wire of the probe (10);
   $p$ = the perimeter of the wire of the probe (10);
   $h$ = the immersed length of the wire of the probe (10);
   $l$ = the total length of the wire of the probe (10);
   $KH$ = the heat exchange coefficient of the wire of the probe (10) in the liquid;
   $KA$ = the heat exchange coefficient of the wire of the probe (10) in air;
   $\gamma$ = the thermal capacity of the wire of the probe (10);
   $x = h/l$;
   $\alpha = KH/KA$; and
   $\tau = \gamma d/4KA$.

3. A device according to claim 1 or 2, characterized by the fact that the monitoring means (30) make use of a relationship of the form:

$$(U_2-U_1) =$$

$$(\alpha'\rho^2 l^3 l/s^2 pKA) [(x/\alpha) (e^{-\alpha t1/\tau}-e^{-\alpha t2/\tau})+(1-x) (e^{-t1/\tau}-e^{-t2/\tau})] \tag{3}$$

in which $U_2$ and $U_1$ represent consecutive voltages measured across the terminals of the probe (10).

4. A device according to any one of claims 1 to 3, characterized by the fact that the monitoring means (30) measure the instants $t_1$, $t_2$, $t_3$, and $t_4$ at which predetermined voltage levels $U_1$, $U_2$, $U_3$, and $U_4$ across the terminals of the probe (10) are crossed, such that $(U_2-U_1)=K(U_4-U_3)$, where K is a known magnitude, and deduce the liquid level from said relationship.

5. A device according to claim 4, characterized by the fact that K=1.

6. A device according to claim 4 or 5, characterized by the fact that $U_3=U_1$.

7. A device according to any one of claims 1 to 6, characterized by the fact that the feed means (20) are formed by a voltage source.

8. A device according to any one of claims 1 to 6, characterized by the fact that the feed means (20) are formed by a current source.

## FIG_1

20

22

10

32

CAN

30

MOYENS LOGIQUES
DE SURVEILLANCE
ET
CALCUL

## FIG_2A

REPONSE DE
LA SONDE 10

$U_2$

$U_1$

$U_0$

$t_0$     $t_1$     $t_2$

## FIG_2B

CRENEAU
DE COURANT

# FIG.3

INITIALISATION DE LA MESURE — 300

EVOLUTION D'UN BIT DE REFERENCE EN SORTIE DU CAN — 302
NON          OUI

MESURE DU TEMPS $t_1$ ET INITIALISATION BOUCLE DE COMPTAGE DU TEMPS $T_{21}$ — 304

EVOLUTION DU BIT DE REFERENCE — 306
NON          OUI

MESURE DU TEMPS $t_2$ ET DE $T_{21}$ — 308

TEMPORISATION — 310

EVOLUTION DU BIT DE REFERENCE — 312
OUI

MESURE DU TEMPS $t_3$ ET INITIALISATION BOUCLE DE COMPTAGE DU TEMPS $T_{43}$ — 314

EVOLUTION DU BIT DE REFERENCE — 316
NON          OUI

MESURE DU TEMPS $t_4$ ET DE $T_{43}$ — 318

CALCUL DE $x$ SUR LA BASE DE
$(U_4 - U_3) = (U_2 - U_1)$ — 320

FIG_4

# FIG. 5